# EUROPÄISCHE PATENTSCHRIFT

(11) **EP 2 126 416 B1**
(45) Veröffentlichungstag und Bekanntmachung des Hinweises auf die Patenterteilung: **16.07.2014**
(21) Anmeldenummer: 07856893.8
(22) Anmeldetag: 19.12.2007
(51) Int. Cl.: F16H 57/04, F16H 57/033

(54) **GETRIEBE MIT ÖLKREISLAUF-VERROHRUNG UND GETRIEBE- BAUREIHE**
GEARBOX WITH OIL CIRCUIT PIPING AND GEARBOX RANGE
TRANSMISSION À TUYAUTERIE DE CIRCUIT D'HUILE ET GAMME DE TRANSMISSIONS

(30) Priorität: 26.01.2007 DE 102007004965
(43) Veröffentlichungstag der Anmeldung: 02.12.2009
(73) Patentinhaber: SEW-EURODRIVE GmbH & Co. KG, 76646 Bruchsal (DE)
(72) Erfinder: GRUNDEL, Eugen, 76703 Kraichtal (DE)
(74) Vertreter: Tüngler, Eberhard
(86) Internationale Anmeldenummer: PCT/EP2007/011170
(87) Internationale Veröffentlichungsnummer: WO 2008/089829

(56) Entgegenhaltungen:
- WO-A-02/093041
- WO-A-03/040593
- WO-A-2005/059409
- DE-A1- 3 709 626
- DE-A1- 19 717 422
- DE-A1- 19 950 967
- GB-A- 2 400 421
- US-A- 2 608 272
- US-A- 3 029 661
- US-A1- 2002 032 093

## Beschreibung

Die Erfindung betrifft ein Getriebe mit Ölkreislauf-Verrohrung und eine Getriebe-Baureihe.

Bei Getrieben wird zur Verminderung der Reibungswärme und als Verschleißschutz Schmierstoff eingefüllt, der bei niedrigem Ölstand trotzdem an Lager und Verzahnungen herangeführt werden muss.

Aus der DE 101 43 929 A1 ist eine Getriebesteuervorrichtung bekannt, bei dem an einen Drehmomentwandler ein zusätzlicher Zahnradsatz vorgesehen ist, über den eine Ölpumpe antreibbar ist.

Aus der DE 199 50 967 A1 ist eine Getriebebaueinheit und eine Steuerplattform für den Einsatz in einer Getriebebaueinheit bekannt, wobei eine elektronische und eine hydraulische Steuervorrichtung im Getriebegehäuse und in unmittelbarer Nähe angeordnet sind.

Aus der DE 101 23 194 A1 sind ein Plattformgetriebe und ein Getriebebaukasten bekannt, bei welchen eine Versorgungseinheit eine Pumpeinrichtung umfasst.

Aus der US 3 029 661 ist eine Allzweck-Untersetzungseinheit bekannt, bei dem mit Bolzen befestigte Stahlplatten ein Getriebegehäuse bilden.

Aus der DE 197 17 422 A1 ist ein Durchflusswächter bekannt, bei welchem ein in dem Fließweg einer Hydraulikflüssigkeit angeordnetes Widerstandselement von einer ersten in eine zweite Stellung bewegbar ist und mit einem elektrischen Kontakt in Verbindung bringbar ist.

Aus der US 3 029 661 ist ein gattungsgemäßes Getriebe mit Ölkreislauf-Verrohrung bekannt, wobei das Getriebe ein Getriebegehäuse umfasst, welches gehäusebildend für einen in einer Gehäusewand ausgebildeten Teils einer Ölkreislauf-Verrohrung ist, wobei der übrige Teil der Ölkreislauf-Verrohrung als externe Verrohrung außerhalb des Getriebegehäuses ausgeführt ist, wobei das Gehäuse ein oberes Gehäuseteil und ein unteres Gehäuseteil umfasst, wobei das untere Gehäuseteil eine untere Gehäuseschale ist und das obere Gehäuseteil eine obere Gehäuseschale ist.

Aus der DE 3709626 A1 ist ein Bootswendergetriebe bekannt, bei welchem eine Pumpe zur Versorgung einer hydraulisch betätigten Reibungskupplung im Inneren eines Getriebes mit einem einteiligen Getriebegehäuse vorgesehen ist, wobei in einer Saugleitung der Pumpe ein an dem Getriebegehäuse befestigter Feinfilter angeordnet ist.

Aus der WO 2005/059409 ist eine Getriebeanordnung für ein industrielles oder landwirtschaftliches Nutzfahrzeug bekannt, bei welcher zwischen zwei zusätzlich über einen mit Schmiermittel befüllten Verbindungskanal verbundenen Getriebeteilen eine Luftpumpe angeordnet ist, mit welcher Luftpumpe in einem Getriebeteil ein Luftüberdruck gegenüber dem anderen Getriebeteil erzeugt werden kann, um den Schmiermittelpegel in dem einen Getriebeteil gegenüber dem anderen Getriebeteil abzusenken.

Der Erfindung liegt die Aufgabe zugrunde, ein Getriebe weiterzubilden, wobei das Getriebe kompakter und kostengünstiger sein soll.

Erfindungsgemäß wird die Aufgabe bei dem Getriebe nach den in Anspruch 1 und bei der Getriebe-Baureihe nach den in Anspruch 7, 8 oder 9 angegebenen Merkmalen gelöst.

Wichtiges Merkmal der Erfindung eines Getriebes mit Gehäuse und Ölkreislauf-Verrohrung ist, dass das Getriebegehäuse zumindest teilweise gehäusebildend für die Ölkreislauf-Verrohrung ist. Somit ist die Ölkreislauf-Verrohrung gegen Beschädigung durch das Getriebegehäuse geschützt, und es ist eine kompakte Getriebeeinheit bereitgestellt. Insbesondere sind keine Ölleitungen im äußeren Bereich um das Getriebe herum vorhanden. Diese sind somit auch nicht verletzbar. Der im Inneren des Getriebes verfügbare Platz, der sich durch eine aus praktischen Erwägungen kastenartige Außenform des Getriebes ergibt, ist somit für die Zuleitung und Verteilung des Schmiermittels an sich drehende Teile im Getriebeinneren nutzbar. Drehende Teile umfassen Zahnräder, Wellen, Lager und dergleichen mehr. Als Schmiermittel ist vorteilhaft Öl einsetzbar. Im Inneren des Getriebegehäuses ist Öl in einem Ölsumpf vorgesehen, aus welchem der Ölkreislauf gespeist wird. Die Verrohrung leitet das aus dem Ölsumpf entnommene Öl an die sich drehenden Teile weiter. Von diesen fließt das Öl zurück in den Ölsumpf. Ein außerhalb des Getriebegehäuses angeordneter Ölbehälter ist somit verzichtbar, ebenso ein Auffangen des Öls an den sich drehenden Teilen und ein Rückleiten an einen Vorratsbehälter.

Gemäß der Erfindung umfasst das Gehäuse ein oberes Gehäuseteil und ein unteres Gehäuseteil, wobei an dem oberen Gehäuseteil ein Saugrohr des Ölkreislaufs und an dem unteren Gehäuseteil ein Druckrohr des Ölkreislaufs angebracht ist. Oben und unten beziehen sich hierbei auf das Schwerfeld der Erde und die Arbeitsposition des Getriebes. Die zweiteilige Ausgestaltung des Getriebegehäuses ermöglich ein einfaches Öffnen und Schließen zur Wartung der Bestandteile des Getriebes. Besonders vorteilhaft ist bei der Anordnung des Saugrohrs am oberen Gehäuseteil, dass beim Öffnen des Getriebes und Entfernen des oberen Gehäuseteils lediglich das robuste und einfache Saugrohr, nicht aber die empfindlichere übrige, mit Druck beaufschlagte Verrohrung bewegt werden muss. Somit ist eine Wartung des Getriebes mit verringerter Fehlergefahr durchführbar.

Gemäß der Erfindung ist das untere Gehäuseteil eine untere Gehäuseschale und das obere Gehäuseteil eine obere Gehäuseschale. Von Vorteil ist dabei insbesondere, dass die untere Gehäuseschale zur Aufnahme eines Ölsumpfs verwendbar ist, der bei Öffnen des Gehäuses nicht notwendig abgepumpt oder abgelassen werden muss. Dies verringert den Zeitaufwand einer Wartung. Ferner hat die Ausbildung des oberen Gehäuseteils als Gehäuseschale den Vorteil, dass die Trennlinie der Gehäuseteile in etwa in der Hälfte vorsehbar ist und durch die Lager der Getriebewelle verlaufen kann. Dies vereinfacht die Montage der Wellen.

Bei einer vorteilhaften Ausgestaltung ist in dem unteren Gehäuseteil der Ölsumpf des Ölkreislaufs angeordnet, in den das Saugrohr mit seinem offenen Ende ragt. Somit ist ein ÖI-Vorratsbehälter vorteilhaft verzichtbar.

Bei einer vorteilhaften Ausgestaltung sind das Saugrohr und das Druckrohr zur Bildung eines Ölkreislaufs mit einer Ölpumpe verbunden, wobei die Pumpe mittels einer Welle des Getriebes, insbesondere der eintreibenden Welle, direkt antreibbar ist. Von Vorteil ist dabei, dass ein separater Antrieb für die zum Umwälzen des Öls nötige Pumpe verzichtbar ist. Somit ist eine verringerte Ausfallrate der Pumpe und damit des Getriebes erreichbar. Ferner ist ein elektrischer Versorgungsanschluss für das Getriebe einsparbar.

Die Schmierölpumpe ist vorzugsweise mit einem Verteiler verbunden ist, an welchem zumindest ein erster Sensor verbunden ist. Die kompakte Einheit aus Verteiler und Pumpe mit Sensor ist robust.

Bei einer vorteilhaften Ausgestaltung ist die Pumpe mit einen Gehäusedeckel des Getriebes und dieser mit dem Gehäuse des Getriebes verbunden, wobei das Saugrohr und das Druckrohr über den Gehäusedeckel, insbesondere durch den Gehäusedeckel hindurch, an die Pumpe angeschlossen sind. Von Vorteil ist dabei, dass zum einen selbst die Anschlussrohre der Pumpe im Inneren des Getriebes, in diesem Fall im Inneren der Gehäusewandung, vorsehbar sind und dass zum anderen der Antrieb der Pumpe auf mechanisch einfachen Weg, nämlich direkt von der Getriebewelle auf eine Welle der Pumpe, bewirkbar ist. Die Einheit von Getriebe und Pumpe mit Verrohrung ist somit robust ausgeführt und für den Einsatz in rauen Umgebungsbedingungen geeignet.

Bei einer vorteilhaften Ausgestaltung ist der Gehäusedeckel an dem oberen Gehäuseteil und an dem unteren Gehäuseteil des Getriebes verbunden. Von Vorteil ist dabei, dass Saugrohr und Druckrohr der Verrohrung in verschiedenen Gehäuseteilen angeordnet werden können und mittels des Getriebedeckel beide Rohre einfach und sicher, insbesondere dicht und sicher gegen funktionshindernde Beschädigung, an die Pumpe anschließbar sind.

Gemäß der Erfindung ist in dem unteren Gehäuseteil ein Verrohrungsverteiler, der von der Verrohrung umfasst ist, vorgesehen, an den das Druckrohr und mindestens ein Versorgungsrohr angeschlossen ist, wobei über das Versorgungsrohr mindestens ein Lager und/oder ein Zahnrad mit Öl zur Schmierung versorgbar ist. Von Vorteil ist dabei, dass eine Vielzahl von sich drehenden Teilen im Inneren des Getriebes mit Schmiermittel über eine Pumpe versorgbar ist.

Bei einer vorteilhaften Ausgestaltung ist an den Verrohrungsverteiler mindestens ein Versorgungsrohr angeschlossen, das an seinem vom Verrohrungsverteiler abgewandten Ende eine Düse aufweist, durch die Öl zur Schmierung an ein Zahnrad bringbar ist, insbesondere in den Bereich des Zahneingriffs eines Zahnradpaares. Von Vorteil ist dabei, dass eine einfach herstellbare und effektive Versorgung von Zahnradpaaren mit Schmiermittel bereitgestellt ist.

Wichtige Merkmale der Erfindung einer Getriebe-Baureihe sind, dass Varianten umfasst sind, wobei in einer ersten Variante eine Schmierölpumpe an einem Deckel des Getriebegehäuses vorgesehen ist, wobei der Deckel ein Lager einer Getriebewelle, insbesondere der eintreibenden Welle, abdeckt und die Pumpe über den Deckel an ein Verrohrungssystem im Getriebeinneren, also eine Ölkreislauf-Verrohrung, angeschlossen ist, und wobei in einer zweiten Variante eine Schmierölpumpe an einem Deckel des Getriebegehäuses vorgesehen ist, die baugleich zur Schmierölpumpe der ersten Variante ist, wobei die Schmierölpumpe an ein teilweise externes Verrohrungssystem angeschlossen ist, insbesondere wobei das externe Verrohrungssystem einen Ölfilter und/oder einen Ölkühler umfasst und/oder mit einem internen Verrohrungssystem verbunden ist. Hier und in der übrigen Schrift bezieht sich das Wort intern auf innerhalb des Getriebegehäuses oder in der Gehäusewandung angeordnete Bereiche, während extern das räumliche Komplement dazu meint. Von Vorteil ist bei der Erfindung, dass eine Baureihe bereitgestellt ist mit einer reduzierten Teilevielfalt und den Vorzügen der Erfindung eines Getriebes mit Ölkreislauf-Verrohrung, wobei je nach Anwenderwunsch oder Einsatzgebiet ein zumindest teilweise externes Verrohrungssystem vorsehbar ist, beispielsweise zum Anschluss des Kreislaufs an einen Filter oder an einen Ölkühler.

Die Bezeichnungen intern und extern beziehen sich auf das Getriebegehäuse: Die externe Verrohrung ist außerhalb des Gehäuses angeordnet, während die interne Verrohrung im Inneren des Getriebes oder in der Gehäusewandung angeordnet ist.

Wichtige Merkmale einer alternativen Ausgestaltung der Erfindung einer Getriebe-Baureihe sind, dass Varianten vorgesehen sind, wobei in einer ersten Variante eine Schmierölpumpe an einem ersten Ende einer Getriebewelle angeordnet ist und durch die Getriebewelle angetrieben wird, und in einer zweiten Variante die Schmierölpumpe an einem zweiten Ende der Getriebewelle angeordnet ist und durch diese Getriebewelle angetrieben wird, wobei die Schmierölpumpe jeweils an ein Verrohrungssystem für Schmieröl im Getriebeinneren angeschlossen ist. Somit sind Varianten bereitgestellt, in denen je nach Bauform, also Anordnung des Getriebes in Arbeitsposition im Schwerefeld der Erde oder eines anderen Planeten, die Pumpe des Ölkreislaufs an verschiedenen Seiten des Getriebes montierbar ist. Die Gehäuseteile weisen dazu vorzugsweise mehr oder weniger im Sinne des Umsetzens der Pumpe symmetrische, insbesondere spiegelsymmetrische, Anschluss- und Durchleitungsmittel zur Bildung des Ölkreislaufs auf.

Wichtige Merkmale einer alternativen Ausgestaltung der Erfindung einer Getriebe-Baureihe sind, dass Varianten vorgesehen sind, wobei in einer ersten Variante das Getriebegehäuse in monobloc-Bauweise ausgeführt ist, in einer zweiten Variante das Getriebegehäuse mindestens zweiteilig ausgeführt ist, wobei in beiden Varianten eine interne Ölkreislauf-Verrohrung vorgesehen ist und wobei die Getriebegehäuse der beiden Varianten im Wesentlichen identisch ausgeformt sind. Von Vorteil ist dabei, dass eine Vielzahl von Bearbeitungsschritten und Montageschritten bei beiden Varianten gleichartig ausführbar ist. Dadurch ist hierbei der Zeitaufwand verringerbar, und Fertigungswerkzeug ist einsparbar.

Bei einer vorteilhaften Ausgestaltung der Baureihe werden Varianten umfasst, die sich aus Kombinationen der vorstehenden Varianten ergeben. So sind beispielsweise Pumpen mit interner oder externer Verrohrung auf verschiedenen Seiten des Getriebes bildbar oder Getriebe mit externer Verrohrung und ohne Verrohrung oder Getriebe mit interner Verrohrung und separat oder über ein zwischengeschaltetes Getriebe aus einer Getriebewelle angetriebener Pumpe.

Die Pumpe ist vorzugsweise mit einem ersten Sensor versehen, der als Durchflusswächter ausgebildet ist. Dies ermöglicht die Überwachung der Funktionstüchtigkeit der Pumpe.

Alternativ oder zusätzlich ist am Verteiler ein Filter und ein zweiter Sensor, insbesondere zur Filterüberwachung, angeschlossen. Das Öl ist durch das Filter reinigbar, und die Reinigungsfähigkeit des Filters ist überwachbar, insbesondere ist das Zusetzen des Filters detektierbar.

Alternativ oder zusätzlich ist die Pumpe mit ihrem Pumpenflansch am Getriebe verbunden. Von Vorteil ist dabei, dass ein Flansch vorgesehen ist, auf den verschieden lange Gehäuse der Pumpe aufsetzbar sind. Somit ist eine Schnittstelle geschaffen, die eine hohe Varianz von Pumpen bei Verwendung immer desselben Flansches ermöglicht.

Alternativ oder zusätzlich ist die Pumpe mit ihrem Sauganschluss und mit mindestens einem Druckausgang mit dem im Inneren des Getriebes vorgesehenen Rohrleitungssystem verbunden. Von Vorteil ist dabei, dass die Pumpe das Schmieröl ansaugen kann und am Druckausgang ins Rohrleitsystem einpressen kann. Dieses leitet dann das Öl, insbesondere mittels Rohrverteilern an die gewünschten Raumbereiche, insbesondere Schmierstellen.

Alternativ oder zusätzlich ist ein Sensor mittels elektrischer Leitungen mit einer elektronischen Schaltung, insbesondere zum Auswerten der Sensorsignale, verbunden. Von Vorteil ist dabei, dass die Auswertung der Signale in geschützter Umgebung, wie Schaltschrank erfolgen kann. Alternativ sind auch Sensoren verwendbar, die mit integrierter elektronischen Schaltung ausgeführt sind.

Alternativ oder zusätzlich sind axial verschieden lange Pumpen am Pumpenflansch verbindbar. Von Vorteil ist dabei, dass eine Baureihe von Pumpen verwirklichbar ist.

Alternativ oder zusätzlich ist die Pumpe angetrieben durch eine Welle des Getriebes, insbesondere die eintreibende Welle oder die erste Zwischenwelle. Von Vorteil ist dabei, dass die Pumpe keinen eigenen Antrieb benötigt, also passiv ist und nur bei Betrieb des Getriebes auch Schmieröl bewegt.

Alternativ oder zusätzlich weist die Pumpe zwei Druckausgänge auf, die derart symmetrisch angeordnet sind, dass bei Montage der Pumpe auf der gegenüberliegenden Seite des Getriebes der jeweils andere Druckausgang für das Verbinden mit dem im Getriebeinneren vorgesehenen Rohrleitungssystem vorgesehen ist, wobei der andere Druckausgang verschlossen ist. Von Vorteil ist dabei, dass insbesondere bei einer 180° Symmetrie die Höhen der Saug und Druck -Anschlüsse auch bei Verwendung der Pumpe auf der gegenüberliegenden Seite gleich bleiben und somit das Rohrleitungssystem nur geringfügig abgeändert werden muss. Außerdem bleibt die Montagereihenfolge gleich, wie auch die sonstigen Rahmenbedingungen.

Weitere Vorteile ergeben sich aus den Unteransprüchen. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1, 10: Pumpe
- 2, 14: erster Sensor
- 3, 13: zweiter Sensor
- 4, 11: Verteilerflansch
- 5, 12: Filter
- 15: Getriebe
- 16, 21: Gehäusedeckel
- 22, 23: Bohrung
- 24: Welle
- 25: Bohrung
- 30: Pumpe
- 31: Flanschplatte
- 32: Pumpenflansch
- 32a: Pumpenflansch in erster Bauform
- 32b: Pumpenflansch in zweiter Bauform
- 34a: erster externer Druckanschluss
- 34b: zweiter externer Druckanschluss
- 36: externer Sauganschluss
- 38: Entlüftungsbohrloch
- 39: Verteiler
- 40: Filter
- 42: Filterüberwachung
- 44: Sensoranschluss
- 46: Ölablassschraube
- 48: Ölablassschraube
- 49: Pumpendeckel
- 50: Pumpenwelle
- 52: Bohrung
- 54: interner Sauganschluss
- 56a: erster interner Druckanschluss
- 56b: zweiter interner Druckanschluss
- 58: Verbindungskanal
- 60: Verbindungskanal
- 62: Befestigungsschraube
- 64: Schraubenloch
- 70a: Pumpe in erster Bauform
- 70b: Pumpe in zweiter Bauform
- 72: Zwischenraum
- 80: Richtung des Schwerefelds der Erde
- 601: obere Gehäuseschale
- 602: untere Gehäuseschale
- 603: erste Welle
- 604: zweite Welle
- 605: dritte Welle
- 606: erstes Lager
- 607: zweites Lager
- 608: drittes Lager
- 609: viertes Lager
- 610: erstes Zahnrad
- 611: zweites Zahnrad
- 612: drittes Zahnrad
- 613: viertes Zahnrad
- 620: Pumpe
- 621: Saugrohr
- 622: Ölsumpf
- 623: Druckrohr
- 624: Verrohrungsverteiler
- 625: erstes Versorgungsrohr
- 626: zweites Versorgungsrohr
- 627: drittes Versorgungsrohr
- 628: Düse

Es zeigt
- Figur 1 ein Getriebegehäuse mit montierter Schmierölpumpe,
- Figur 2 eine Prinzipskizze einer Schmierölpumpe mit Filter und Sensoren,
- Figur 3 eine Schmierölpumpe mit Pumpenflansch und Filter,
- Figur 4 eine teilweise Explosionsdarstellung der Schmierölpumpe aus Figur 3,
- Figur 5 unterschiedliche Bauformen der Schmierölpumpe aus Figur 3 und
- Figur 6 eine Prinzipskizze eines Getriebes mit Schmierölpumpe und Ölkreislauf-Verrohrung.

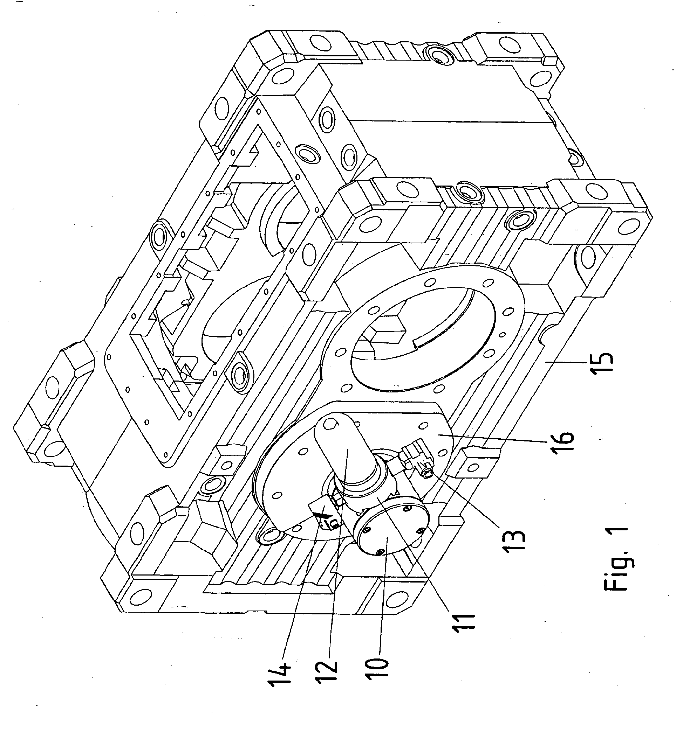

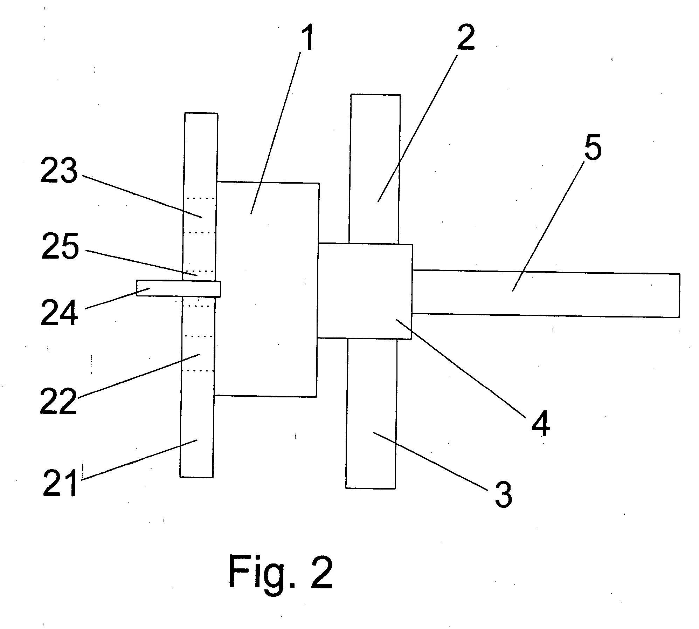

In der Figur 2 ist ein erfindungsgemäßes System symbolisch gezeigt. In Figur 1 ist ein konkretisiertes System an einem Getriebe gezeigt.

Vorteilhaft ist, dass keine Ölleitungen im Außenbereich des Getriebes um das System herum vorzusehen sind. Denn das System wird an einem Getriebedeckel 16 eingebracht und mit dem Rohrleitungssystem des Getriebeinneren verbunden durch diesen Getriebedeckel 16 hindurch verbunden.

Das System ist in Figur 2 dargestellt. Eine Pumpe 1 ist an einem Gehäusedeckel 21 eines Getriebegehäuses montiert. Die Pumpe 1 saugt Öl an ihrem Sauganschluss über eine Bohrung 22 und drückt dieses heraus an ihrem Druckausgang über eine Bohrung 23, zurück in das Getriebeinnere. Der an der Pumpe 1 vorgesehen Verteilerflansch 4 erübrigt weitere äußere Druckleitungen und ermöglicht das direkte Anschließen von Sensoren und Filtern. Die Pumpe 1 ist mit einer Welle 24 des Getriebes verbunden, die durch eine Bohrung 25 im Gehäusedeckel 21 hindurch die Pumpe 1 antreibt. In der Endfläche der Pumpenwelle sind auf einem Durchmesser der Welle zwei nicht gezeigte, axial ausgerichtete Stifte angeordnet, die in entsprechend ausgebildete Bohrungen in der Getriebewelle 24 eingreifen und somit eine Formschluss zum Antrieb der Pumpe 1 bewirken.

Insbesondere ist ein erster Sensor 2 und ein zweiter Sensor 3 vorgesehen, wobei der erste beispielhaft als Durchflusswächter und der zweite als Filterüberwachung ausgeführt ist, der die Funktionstüchtigkeit des ebenfalls an den Verteilerflansch 4 angeschlossenen Filters 5 überwacht. Wenn das Filter zunehmend verstopft ist, gibt dieser zweite Sensor 3 also ein entsprechendes Signal ab an eine verbundene elektronische Schaltung.

Der Sensor 3 vergleicht den Öldruck des ins Filter 5 einströmenden Öls mit dem aus diesem herausströmenden Öl. Übersteigt die Druckdifferenz einen kritischen Wert, wird das Signal ausgelöst oder der Wert gemeldet. Alternativ wird der Wert ständig gemessen und in regelmäßigen Zeitabständen an eine übergeordnete elektronische Schaltung gemeldet.

Der Sensor 2 detektiert den Durchfluss und meldet die Werte an eine übergeordnete elektronische Schaltung oder er löst ein Signal aus, wenn der Durchfluss unter einen kritischen Wert fällt.

In Figur 1 sind die in Figur 2 genannten Teile konkretisiert ausgeführt und an ein Getriebe verbunden.

Die Pumpe 10 ist also nun als kompakte Einheit ausgeführt und kann direkt an ein Getriebe angeschlossen werden. Es entfallen externe Leitungen, die empfindlich sein können.

Der erste Sensor 14 und der zweite Sensor 13 sind am Verteilerflansch 11 vorgesehen, an dem auch das Filter 12 vorgesehen ist. Das Getriebe 15 weist also einen Gehäusedeckel 16 auf, in welchem das System einbaubar ist. Im Gegensatz zur Figur 2 sind in Figur 1 Verteilerflansch 11, Sensoren (13, 14) und Filter 12 in etwa in einer Ebene angeordnet, die parallel zu der Gehäusewand verläuft.

In weiteren erfindungsgemäßen Ausführungsbeispielen sind als Sensoren Vorrichtungen vorgesehen, die nach anderen Messprinzipien arbeiten.

In weiteren erfindungsgemäßen Ausführungsbeispielen sind die bloßen Sensoren mittels elektrischer Leitungen mit jeweiligen Auswerteschaltungen verbunden, die entfernt vom Getriebe vorgesehen sind, beispielsweise im Schaltschrank.

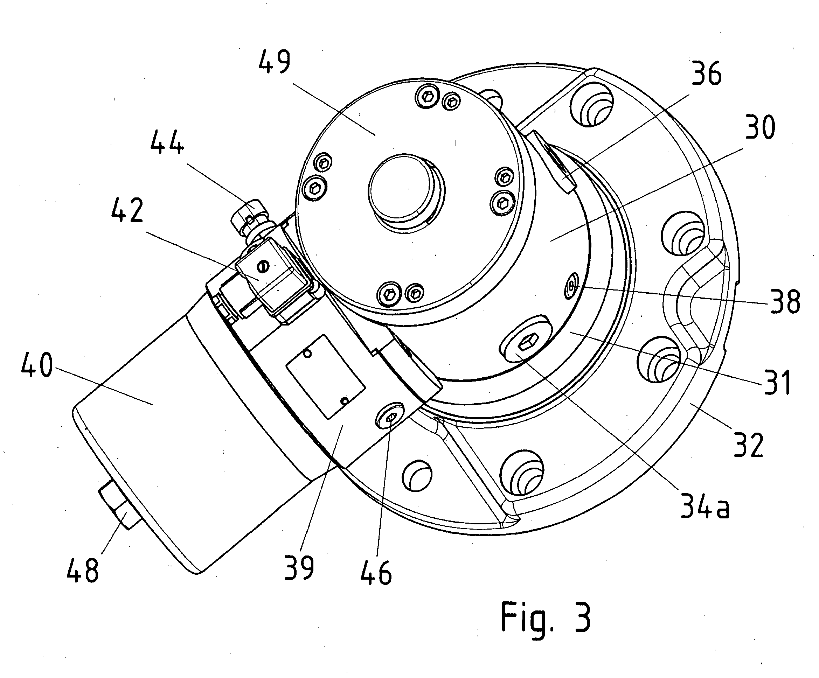

Figur 3 zeigt ein weiteres erfindungsgemäßes Ausführungsbeispiel. Eine Pumpe 30 ist über eine Flanschplatte 31 mit einem Pumpenflansch 32 verbunden. Der Pumpenflansch ist auf einem nicht gezeigten Getriebedeckel angebracht. Das Gehäuse der Pumpe 30 weist einen ersten externen Druckanschluss 34a, einen zweiten externen Druckanschluss 34b, einen externen Sauganschluss 36 und eine Entlüftungsbohrung 38 auf, die jeweils mittels Schrauben verschlossen sind. Ein Pumpendeckel 49 schließt die Pumpe 30 axial ab.

Die Begriffe extern und intern beziehen sich auf die Möglichkeit eines Anschlusses an eine externe, also außerhalb eines Getriebes gelegenen, Verrohrung bzw. einer internen, also innerhalb eines Getriebes oder in der Wandung das Gehäuses angeordneten.

Mit der Pumpe 30 ist ein Verteiler 39 verbunden, an dem ein Filter 40, ein Anschluss zur Filterüberwachung 42 und ein Sensoranschluss 44 für einen Durchflusswächter angebracht sind. Eine Ölablassschraube 46 verschließt eine Ölablassbohrung. Eine weitere Ölablassschraube 48 ist am Filter 40 vorgesehen.

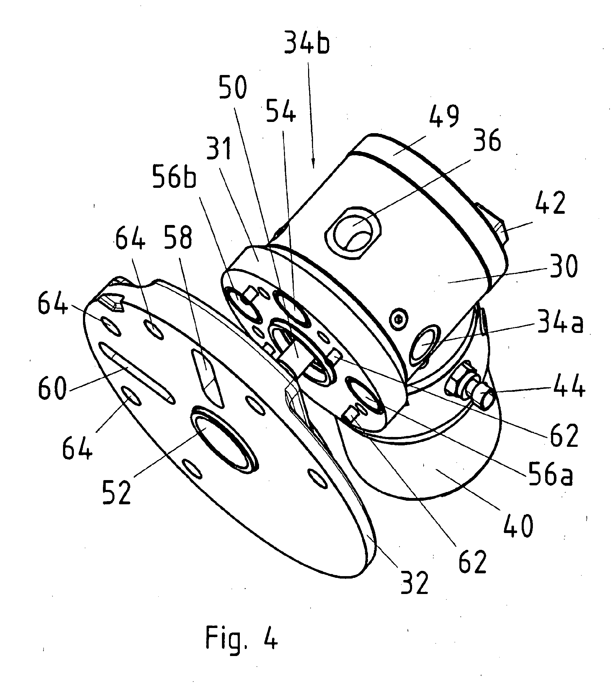

Figur 4 zeigt eine andere Ansicht desselben Ausführungsbeispiels in teilweiser Explosionsdarstellung. Die Pumpenwelle 50 der Pumpe 30 ist im montierten Zustand durch einen Bohrung 52 mit einer Getriebewelle verbunden. Diese Getriebewelle ist vorzugsweise die eintreibende Getriebewelle.

Die Flanschplatte 31 weist einen internen Sauganschluss 54, einen ersten internen Druckanschluss 56a und einen zweiten internen Druckanschluss 56b auf. Der interne Sauganschluss 54 wird bei Aufsetzen der Flanschplatte 31 auf den Pumpenflansch 32 mit einer Bohrung zur Deckung gebracht, die in einen Verbindungskanal 58 mündet. Der erste interne Druckanschluss 56a wird bei Aufsetzen der Flanschplatte 31 auf den Gehäusedeckel 32 mit einer Bohrung zur Deckung gebracht, die in einen Verbindungskanal 60 mündet. Der zweite interne Druckanschluss 56b wird bei Aufsetzen der Flanschplatte 31 auf den Pumpenflansch 32 durch den Pumpenflansch 32 dicht verschlossen. Der Pumpenflansch 32 ist auf einem nicht gezeigten Getriebedeckel montiert. Die Verbindungskanäle (58, 60) münden durch diesen in eine Ölumlauf-Verrohrung, deren Enden in zu den Verbindungskanälen (58, 60) passende Bohrungen eingerollt sind.

Die Verbindungskanäle (58, 60) sind somit mit Anschlüssen einer internen Verrohrung im Getriebegehäuse verbindbar. Durch die langlochförmige Ausbildung der Verbindungskanäle (58, 60) ist ein und der derselbe Pumpenflansch 32 auf verschiedene Getriebegehäuse, insbesondere verschiedene Getriebedeckel, die sich durch den relativen Abstand der Verrohrungsanschlüsse unterscheiden, montierbar. Somit ist ein und derselbe Pumpenflansch an verschiedenen Getriebegrößen, die sich insbesondere durch ihre Lagerdurchmesser voneinander unterscheiden, einsetzbar.

Befestigungsschrauben 62 sichern die Flanschplatte 31 relativ zum Pumpenflansch 32 gegen ein Verdrehen und fixieren die Pumpe 30 auf dem Pumpenflansch 32.

Über Schraubenlöcher 64 ist der Pumpenflansch 32 mittels Schrauben mit dem Getriebegehäuse verbindbar.

Über einen externen Sauganschluss 36 und einen ersten externen Druckanschluss 34a ist ein zumindest teilweise außerhalb des Getriebegehäuses verlaufender Ölkreislauf anschließbar. Ein solcher externer Anschluss ist insbesondere erforderlich, wenn eine zusätzliche Ölkühlung erforderlich ist. Zum Anschluss einer externen Verrohrung wird jeweils die in Fig. 3 gezeigte Verschlussschraube herausgenommen.

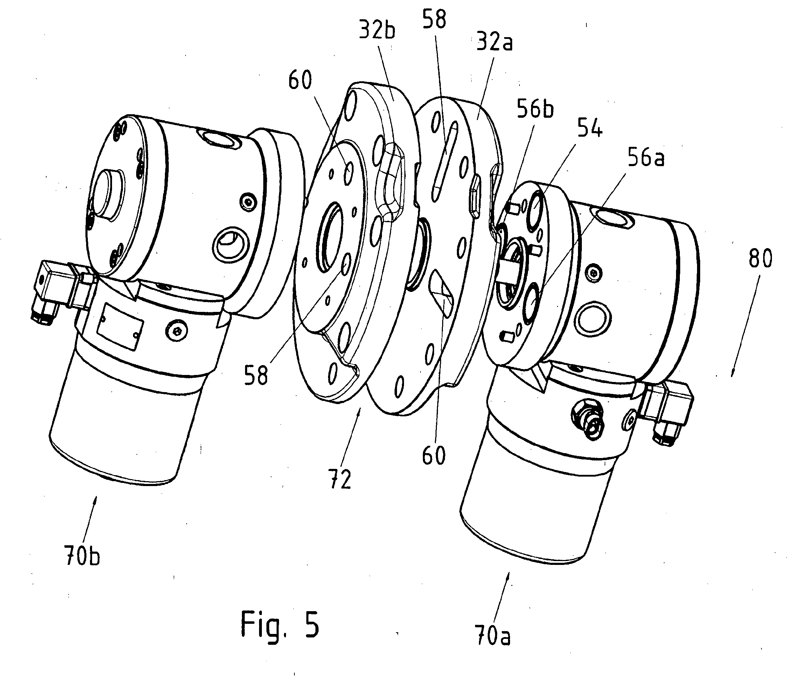

Figur 5 zeigt das Prinzip der zweiseitigen Montage der Wellenpumpe mit Filter. Das Getriebegehäuse ist gedanklich zwischen dem Pumpenflansch in erster Bauform 32a und dem Pumpenflansch in zweiter Bauform 32b im Zwischenraum 72 anzuordnen.

Unter Bauform eines Gegenstandes wird in dieser Schrift die Orientierung zweier, vorzugsweise senkrecht aufeinander stehender, mathematisch-gedachter, im Gegenstand in Arbeitsposition angeordneter Achsen bezüglich des als homogen genäherten Schwerefelds der Erde verstanden. Beispielsweise sind derartige Achsen bei einem Getriebe durch die Richtung der eintreibenden Welle und eine senkrecht auf dieser und einer Gehäusewand stehenden Achse gegeben. Beispielsweise sind derartige Achsen bei einer Pumpe mit Filter nach Figur 3 durch die Richtung der Pumpenwelle und die Symmetrieachse des Filters gegeben.

In einer ersten Bauform ist die Pumpe 70a mit dem Pumpenflansch 32a derart verbunden, dass ein erster Verbindungskanal 58 im Pumpenflansch 32a mit dem internen Sauganschluss 54 der Pumpe 70a verbunden ist, dass ein zweiter Verbindungskanal 60 im Gehäusedeckel 32a mit dem ersten internen Druckanschluss 56a und dass der zweite interne Druckanschluss 56b durch den Gehäusedeckel 32a dicht verschlossen wird.

In einer zweiten Bauform ist die Pumpe 70b mit dem Pumpenflansch 32b derart verbunden, dass der zweite Verbindungskanal 60 im Pumpenflansch 32b mit dem internen Sauganschluss 54 der Pumpe 70a verbunden ist, dass der erste Verbindungskanal 58 im Pumpenflansch 32a mit dem zweiten internen Druckanschluss 56b und dass der erste interne Druckanschluss 56a durch den Pumpenflansch 32b dicht verschlossen wird.

Die Verbindungskanäle (58, 60) sind mit je einem Anschlussrohr der internen Verrohrung des Getriebes verbunden.

Somit wird in beiden Bauformen mit demselben Pumpenflansch (32a, 32b) und derselben Pumpe (70a, 70b) der Sauganschluss 54 jeweils mit dem bezüglich des Schwerefelds der Erde 80 oberen Anschlussrohr der internen Verrohrung verbunden. Somit sind unterschiedliche Bauformen mit einem reduzierten Teilesortiment bereitstellbar.

Wie in Figur 4 gezeigt, weist die Pumpe 30 weiterhin einen zweiten externen Druckanschluss 34b auf. Dieser wird verwendet bei einer Montage der Pumpe 30 in einer zweiten Bauform und mit zumindest teilweise externer Verrohrung, und zwar in entsprechender Weise wie in Figur 5 gezeigt. Es entspricht also beispielsweise die Verwendung des ersten externen Druckanschluss 34a aus Figur 4 der Verwendung des ersten internen Druckanschlusses 56a in Figur 5, die Verwendung des zweiten externen Druckanschluss 34b aus Figur 4 der Verwendung des zweiten internen Druckanschlusses 56b in Figur 5, die Verwendung des externen Sauganschluss 36 aus Figur 4 der Verwendung des internen Sauganschlusses 54 in Figur 5.

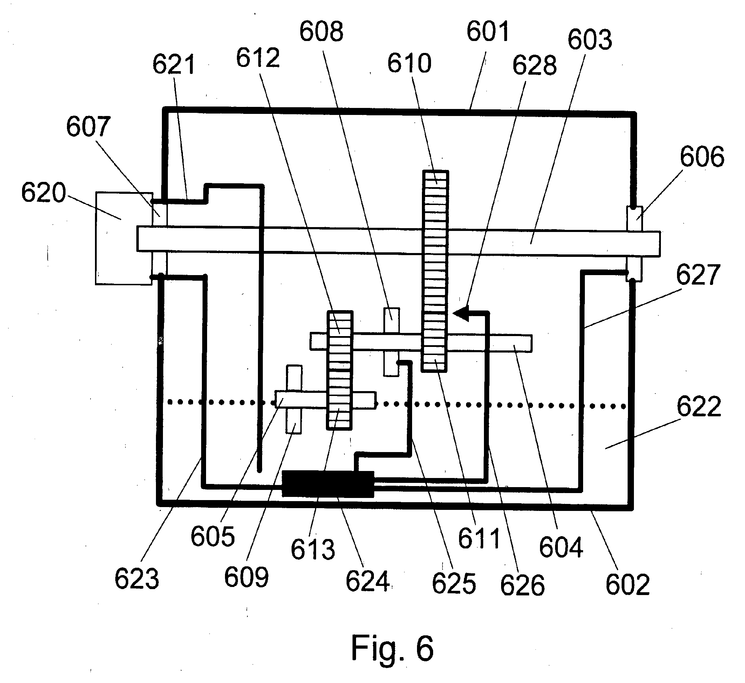

Figur 6 zeigt schematisch ein erfindungsgemäßes Ausführungsbeispiel eines Getriebes mit Wellenpumpe und interner Verrohrung.

Das Getriebegehäuse umfasst eine erste Gehäuseschale 601 und eine zweite Gehäuseschale 602. Das Getriebe umfasst eine erste Welle 603, eine zweite Welle 604 und eine dritte Welle 605, auf denen wie gezeigt ein erstes Zahnrad 610, ein zweites Zahnrad 611, ein drittes Zahnrad 612 und ein viertes Zahnrad 613 vorgesehen sind. Die Wellen sind zumindest durch ein erstes Lager 606, ein zweites Lager 607, ein drittes Lager 608 und ein viertes Lager 609 festgelegt und/oder gelagert.

Die Anordnung der Wellen, Zahnräder und Lager relativ zueinander und bezüglich der Gehäuseschalen (610, 620) ist lediglich schematisch zur Verdeutlichung des Funktionsprinzips dargestellt. Der Fachmann wird gegebenenfalls routinemäßig weitere, nicht gezeigte Lager und weitere Zahnräder und weitere Wellen und/oder diese in einer anderen Anordnung vorsehen, um weitere erfindungsgemäße Ausführungsbeispiele bereitzustellen.

Die erste Welle 603 in Figur 6 ist eine entreibende Welle des Getriebes.

An der ersten Welle 603 ist eine Pumpe 620 montiert, die von der Welle 603 angetrieben wird. Die Pumpe 620 ist als Wellenpumpe ausgebildet und dient als Ölumwälzpumpe.

Die Pumpe 620 ist mit einem Saugrohr 621 verbunden, das in einen Ölsumpf 622 ragt. Die Pumpe 620 ist über ein Druckrohr 623 mit einem Verrohrungsverteiler 624 verbunden. Somit pumpt die über die erste Welle 603 angetriebene Pumpe 620 Öl aus dem Ölsumpf 622 an den Verrohrungsverteiler 624.

An den Verrohrungsverteiler 624 ist zumindest ein erstes Versorgungsrohr 625, ein zweites Versorgungsrohr 626 und ein drittes Versorgungsrohr 627 angeschlossen, durch die das an den Verrohrungsverteiler 624 gepumpte Öl weitergeleitet wird.

Der Verrohrungsverteiler 624 ist also zur Verteilung von Öl vorgesehen.

Das erste Versorgungsrohr 625 endet im dritten Lager 608, wodurch Öl zur Schmierung des dritten Lagers 608 bereitgestellt wird.

Das zweite Versorgungsrohr 626 endet in einer Düse 628, durch die Öl in den Zahneingriff des ersten Zahnrads 610 mit dem zweiten Zahnrad 611 gespritzt wird.

Das dritte Versorgungsrohr 627 endet im ersten Lager 606, das im Getriebegehäuse festgelegt ist. Durch das dritte Versorgungsrohr 627 wird somit das erste Lager 606 geschmiert.

Weitere Versorgungsrohre sind vorgesehen, aber aus Gründen der Übersichtlichkeit nicht gezeigt. Die dritte Welle 605, das vierte Lager 609 und das vierte Zahnrad 613 tauchen jeweils teilweise in den Ölsumpf 622 ein. Die genannten Teile (605, 609, 613) werden somit direkt aus dem Ölsumpf 622 mit Schmieröl versorgt. Das vierte Zahnrad 613 versorgt über den gemeinsamen Zahneingriff das dritte Zahnrad 612 mit Schmieröl aus dem Ölsumpf 622.

Durch die Ausgestaltung nach Figur 5 ist zum einen die gesamten Verrohrung zur Ölschmierung im Getriebegehäuse und damit gegen unbeabsichtigte Beschädigung geschützt angeordnet, zum anderen die obere Gehäuseschale 601 abnehmbar, ohne den mit Druck beaufschlagten, empfindlichen Teil der Verrohrung, umfassend zumindest Druckrohr 623, Verrohrungsverteiler 624 und Versorgungsrohre (625, 626, 627), demontieren zu müssen. Insbesondere ist nach Abnehmen der oberen Gehäuseschale 601 höchstens das einfach und robust ausgeführte Saugrohr 621 von Hand neu zu justieren.

In einem weiteren Ausführungsbeispiel ist das Getriebegehäuse als monobloc-Variante, also einteilig, ausgeführt. Dabei wird vorteilhaft die Anordnung von Bohrungen für Wellen oder Verrohrungsanschlüsse oder andere Durchführungen und/oder Montagepunkte identisch zur Variante mit geteiltem Gehäuse gewählt. Somit sind die Getriebegehäuse der monobloc-Variante und der oben beschriebenen zweiteiligen Variante im Wesentlichen identisch. Beide Gehäuse unterscheiden sich lediglich in den Details, die mit der Zweiteiligkeit unmittelbar zusammenhängen, beispielsweise eine Schnittfläche mit Bohrungen für Schrauben, Dichtmittel usw. Somit sind viele Fertigungsschritte und Bedienungsschritte für beide Varianten gleich ausführbar.

In weiteren erfindungsgemäßen Ausführungsbeispielen weist die Pumpe einen Sauganschluss und zwei Druckausgänge auf, wobei die Ausgänge symmetrisch zur Pumpenachse angeordnet sind. Somit kann dann der Getriebedeckel mit dem System zusammen auf der gegenüberliegenden Seite des Getriebes vorgesehen werden und dabei der andere Ausgang für das im Getriebeinneren vorgesehene Leitungssystem vorgesehen werden. Das Leitungssystem muss dabei nur unwesentlich geändert werden und die Montage kann in gleicher Art erfolgen. Somit ist der gleiche Deckel mit System am Getriebe wiederverwendbar.

In weiteren erfindungsgemäßen Ausführungsbeispielen weist die Pumpe einen Flansch zum Getriebe hin auf und kann durch eine andere Pumpe ersetzt werden, die am gleichen Flansch anmontierbar ist. Auf diese Weise sind verschiedene Pumpen, insbesondere axial verschieden lange Pumpen realisierbar. Somit ist je nach Drehzahl der die Pumpe antreibenden Welle oder je nach benötigter Durchflussmenge eine größere oder kleinere Pumpe verbindbar.

In weiteren erfindungsgemäßen Ausführungsbeispielen ist die Pumpe verbunden und angetrieben von der eintreibenden Welle oder der ersten Zwischenwelle des Getriebes. Somit ist nur eine kleine Pumpe notwendig, da eine hohe Drehzahl der Pumpe vorliegt.

Unter Öl werden bei der Erfindung auch andere flüssige Schmierstoffe verstanden, beispielsweise Schmierfett, dessen Viskosität bei Betriebstemperatur der einer Flüssigkeit gleicht und das somit pumpbar ist.

Weitere Vorteile ergeben sich aus den Unteransprüchen. Die Erfindung ist auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe, die aber kein Teil der Erfindung sind.

## Patentansprüche

1. Getriebe (15) mit Ölkreislauf-Verrohrung (621, 623, 624, 625, 626, 627),
wobei das Getriebe (15) ein Getriebegehäuse (601, 602) umfasst, welches gehäusebildend für einen im Inneren des Getriebes (15) angeordneten Teils der Ölkreislauf-Verrohrung ist und das Gehäuse (601, 602) ein oberes Gehäuseteil (601) und ein unteres Gehäuseteil (602) umfasst,
wobei das untere Gehäuseteil (602) eine untere Gehäuseschale ist
und das obere Gehäuseteil (601) eine obere Gehäuseschale ist,
**dadurch gekennzeichnet, dass**
an dem oberen Gehäuseteil (601) im Inneren des Getriebes (15) ein Saugrohr (621) der Ölkreislauf-Verrohrung (621, 623, 624, 625, 626, 627) angebracht ist
und an dem unteren Gehäuseteil **(602) im Inneren des Getriebes (15)** ein Druckrohr **(623)** der Ölkreislauf-Verrohrung **(621, 623, 624, 625, 626, 627)** angebracht ist **und dass** in dem unteren Gehäuseteil **(602)** ein Verrohrungsverteiler (624), der von der Ölkreislauf-Verrohrung **(621, 623, 624, 625, 626, 627)** umfasst ist, vorgesehen ist, an den das Druckrohr **(623)** und mindestens ein Versorgungsrohr **(625, 626, 627)** angeschlossen **sind,**
wobei über das Versorgungsrohr **(625, 626, 627)** mindestens ein Lager (606, 607, **608, 609)** und/oder ein Zahnrad **(610, 611, 612, 613)** mit Öl zur Schmierung versorgbar ist/**sind.**

2. Getriebe nach Anspruch 1,
**dadurch gekennzeichnet, dass**
in dem unteren Gehäuseteil **(602) ein** Ölsumpf des Ölkreislaufs angeordnet ist,
in den das Saugrohr **(621)** mit seinem offenen Ende ragt.

3. Getriebe nach mindestens einem der vorangegangenen Ansprüche,
**dadurch gekennzeichnet, dass**
das Saugrohr **(621)** und das Druckrohr **(623)** zur Bildung eines Ölkreislaufs mit einer Schmierölpumpe **(1, 10, 620)** verbunden sind,
wobei die Schmierölpumpe **(1, 10, 620)** mittels einer Welle **(24, 603, 604, 605)** des Getriebes **(15),** insbesondere der eintreibenden Welle, direkt antreibbar ist.

4. Getriebe nach mindestens einem der vorangegangenen Ansprüche,
**dadurch gekennzeichnet, dass**
die Schmierölpumpe **(1, 10, 620) mit** einem Gehäusedeckel **(16, 21)** des Getriebes **(15)** und dieser mit dem Gehäuse **(601, 602)** des Getriebes **(15)** verbunden ist,
wobei das Saugrohr **(621)** und das Druckrohr **(623) durch den Gehäusedeckel (16, 21) hindurch** an die Schmierölpumpe **(1, 10, 620)** angeschlossen sind.

5. Getriebe nach mindestens einem der vorangegangenen Ansprüche,
**dadurch gekennzeichnet, dass**
der Gehäusedeckel **(16, 21)** an dem oberen Gehäuseteil **(601)** und an dem unteren Gehäuseteil **(602)** des Getriebes **(15)** verbunden ist.

6. Getriebe nach mindestens einem der vorangegangenen Ansprüche,
**dadurch gekennzeichnet, dass**
an den Verrohrungsverteiler **(624)** mindestens ein Versorgungsrohr **625, 626, 627)** angeschlossen ist, das an seinem vom Verrohrungsverteiler **(624)** abgewandten Ende eine Düse **(628)** aufweist, durch die Öl zur Schmierung an ein Zahnrad **(610, 611, 612, 613)** bringbar ist, insbesondere in den Bereich des Zahneingriffs eines Zahnradpaares.

7. Getriebe-Baureihe, umfassend Varianten,
wobei in einer ersten Variante eine Schmierölpumpe **(1, 10, 620)** an einem Deckel **(16, 21)** eines Getriebegehäuses **(601, 602)** vorgesehen ist, wobei der Deckel **(16, 21)** ein Lager **(606, 607, 608, 609)** einer Getriebewelle **(24, 603, 604, 605, 606),** insbesondere der eintreibenden Welle, abdeckt und die Schmierölpumpe **(1, 10, 620)** über den Deckel **(16, 21) an** eine Ölkreislauf-Verrohrung **(621, 623, 624, 625, 626, 627)** im Getriebeinneren angeschlossen ist, und wobei in einer zweiten Variante eine Schmierölpumpe **(1, 10, 620)** an einem Deckel **(16, 21)** eines Getriebegehäuses **(601, 602)** vorgesehen ist, die baugleich zur Schmierölpumpe **(1, 10, 620)** der ersten Variante ist, wobei die Schmierölpumpe **(1, 10, 620)** an ein teilweise externes Verrohrungssystem angeschlossen ist, insbesondere wobei das externe Verrohrungssystem einen Ölfilter **(40)** und/oder einen Ölkühler umfasst und/oder mit einem internen Verrohrungssystem **(621, 623, 624, 625, 626, 627)** verbunden ist.

8. Getriebe-Baureihe, umfassend Varianten,
wobei in einer ersten Variante eine Schmierölpumpe **(1, 10, 620)** an einem ersten Ende einer Getriebewelle **(24, 603, 604, 605, 606)** angeordnet ist und durch die Getriebewelle **(24, 603, 604, 605, 606)** angetrieben wird,
und in einer zweiten Variante die Schmierölpumpe **(1, 10, 620)** an einem zweiten Ende der Getriebewelle **(24, 603, 604, 605, 606)** angeordnet ist und durch diese Getriebewelle **(24, 603, 604, 605, 606)** angetrieben wird,
wobei die Schmierölpumpe **(1, 10, 620)** jeweils an ein Verrohrungssystem **(621, 623, 624, 625, 626, 627)** für Schmieröl im Getriebeinneren, insbesondere an eine interne Ölkreislauf-Verrohrung, angeschlossen ist.

9. Getriebe-Baureihe, umfassend Varianten,
wobei
in einer ersten Variante ein Getriebegehäuse **(601, 602)** in monobloc-Bauweise ausgeführt ist,
in einer zweiten Variante ein Getriebegehäuse **(601, 602)** mindestens zweiteilig ausgeführt ist,
wobei in beiden Varianten eine interne Ölkreislauf-Verrohrung **(621, 623, 624, 625, 626, 627)** vorgesehen ist
und wobei die Getriebegehäuse **(601, 602) der** beiden Varianten im Wesentlichen identisch ausgeformt sind.

10. **Baukasten für Getriebe-Varianten,**
**umfassend eine Schmierölpumpe (1, 10, 620), einen Deckel (16, 21), ein Getriebegehäuses (601, 602), wenigstens ein Lager (606, 607, 608, 609), wenigstens eine Getriebewelle (24, 603, 604, 605, 606), insbesondere eine eintreibenden Welle, eine im Getriebeinneren montierbare Ölkreislauf-Verrohrung (621, 623, 624, 625, 626, 627) und ein externes Verrohrungssystem,**
**wobei mit dem Deckel (16, 21) das Lager (606, 607, 608, 609) der Getriebewelle (24, 603, 604, 605, 606) abdeckbar ist,**
**dadurch gekennzeichnet, dass**
**zur Bildung einer ersten Variante einer Getriebe-Baureihe nach Anspruch 7 die Schmierölpumpe (1, 10, 620) über den Deckel (16, 21) an eine Ölkreislauf-Verrohrung (621, 623, 624, 625, 626, 627) im Getriebeinneren anschließbar ist und zur Bildung einer zweiten Variante einer Getriebe-Baureihe nach Anspruch 7 die Schmierölpumpe (1, 10, 620) an einem Deckel (16, 21) des Getriebegehäuses (601, 602) montierbar ist, wobei zur Bildung der zweiten Variante die Schmierölpumpe (1, 10, 620) an ein teilweise externes Verrohrungssystem anschließbar ist, insbesondere wobei das externe Verrohrungssystem einen Ölfilter (40) und/oder einen Ölkühler umfasst und/oder mit einem internen Verrohrungssystem (621, 623, 624, 625, 626, 627) verbunden ist.**

11. **Baukasten für Getriebe-Varianten,**
**umfassend eine Schmierölpumpe (1, 10, 620), eine Getriebewelle (24, 603, 604, 605, 606) mit einem ersten Ende und einem zweiten Ende und ein Verrohrungssystem (621, 623, 624, 625, 626, 627),**
**dadurch gekennzeichnet, dass**
**zur Bildung einer ersten Variante einer Getriebe-Baureihe nach Anspruch 8 die Schmierölpumpe (1, 10, 620) an dem ersten Ende der Getriebewelle (24, 603, 604, 605, 606) angeordnet werden kann und durch die Getriebewelle (24, 603, 604, 605, 606) antreibbar ist**
**und zur Bildung einer zweiten Variante einer Getriebe-Baureihe nach Anspruch 8 die Schmierölpumpe (1, 10, 620) an dem zweiten Ende der Getriebewelle (24, 603, 604, 605, 606) angeordnet werden kann und durch diese Getriebewelle (24, 603, 604, 605, 606) antreibbar ist,**
**wobei die Schmierölpumpe (1, 10, 620) jeweils an das Verrohrungssystem (621, 623, 624, 625, 626, 627) für Schmieröl im Getriebeinneren, insbesondere an eine interne Ölkreislauf-Verrohrung, angeschließbar ist.**

12. **Baukasten für Getriebe-Varianten,**
**umfassend ein Getriebegehäuse (601, 602) in monobloc-Bauweise, ein mindestens zweiteilig ausgeführtes Getriebegehäuse (601, 602) und eine interne Ölkreislauf-Verrohrung (621, 623, 624, 625, 626, 627),**
**wobei das Getriebegehäuse (601, 602) in monobloc-Bauweise und das mindestens zweiteilig ausgeführte Getriebegehäuse (601, 602) im Wesentlichen identisch ausgeformt sind,**
**wobei**
**zur Bildung einer ersten Variante einer Getriebe-Baureihe nach Anspruch 9 die** interne **Ölkreislauf-Verrohrung (621, 623, 624, 625, 626, 627) in dem Getriebegehäuse (601, 602) in monobloc-Bauweise montierbar ist und**
**zur Bildung einer zweiten Variante einer Getriebe-Baureihe nach Anspruch 9 die interne Ölkreislauf-Verrohrung (621, 623, 624, 625, 626, 627) in dem mindestens zweiteilig ausgeführten Getriebegehäuse (601, 602)montierbar ist.**

13. **Verwendung einer Schmierölpumpe bei zwei Getriebe-Varianten (1, 10, 620), dadurch gekennzeichnet, dass**
**zur Bildung einer ersten Variante eine Schmierölpumpe (1, 10, 620) über einen Deckel (16, 21) eines Getriebegehäuses (601, 602),**
**wobei mit dem Deckel (16, 21) ein Lager (606, 607, 608, 609) einer Getriebewelle (24, 603, 604, 605, 606), insbesondere einer eintreibenden Welle, abgedeckt wird,**
**an eine Ölkreislauf-Verrohrung (621, 623, 624, 625, 626, 627) im Getriebeinneren angeschlossen wird**
**und zur Bildung einer zweiten Variante die Schmierölpumpe (1, 10, 620) an dem Deckel (16, 21) des Getriebegehäuses (601, 602) vorgesehen wird,**
**wobei zur Bildung der zweiten Variante die Schmierölpumpe (1, 10, 620) an ein teilweise externes Verrohrungssystem angeschlossen wird,**
**insbesondere wobei das externe Verrohrungssystem einen Ölfilter (40) und/oder einen Ölkühler umfasst und/oder mit einem internen Verrohrungssystem (621, 623, 624, 625, 626, 627) verbunden wird.**

14. **Verwendung einer Schmierölpumpe bei zwei Getriebe-Varianten (1, 10, 620), dadurch gekennzeichnet, dass**
**zur Bildung einer ersten Variante eine Schmierölpumpe (1, 10, 620) an einem ersten Ende einer Getriebewelle (24, 603, 604, 605, 606) angeordnet wird und durch die Getriebewelle (24, 603, 604, 605, 606) angetrieben wird,**
**und zur Bildung einer zweiten Variante die Schmierölpumpe (1, 10, 620) an einem zweiten Ende der Getriebewelle (24, 603, 604, 605, 606) angeordnet wird und durch diese Getriebewelle (24, 603, 604, 605, 606) angetrieben wird,**
**wobei die Schmierölpumpe (1, 10, 620) jeweils an ein Verrohrungssystem (621, 623, 624, 625, 626, 627) für Schmieröl im Getriebeinneren, insbesondere an eine interne Ölkreislauf-Verrohrung, angeschlossen wird.**

15. **Verwendung einer internen Ölkreislauf-Verrohrung (621, 623, 624, 625, 626, 627) bei zwei Getriebe-Varianten (1, 10, 620),**
**dadurch gekennzeichnet, dass**
**zur Bildung einer ersten Variante die interne Ölkreislauf-Verrohrung (621, 623, 624, 625, 626, 627) in einem in monobloc-Bauweise ausgeführten Getriebegehäuse (601, 602) vorgesehen wird**
**und zur Bildung einer zweiten Variante die interne Ölkreislauf-Verrohrung (621, 623, 624, 625, 626, 627) in einem mindestens zweiteilig ausgeführten Getriebegehäuse (601, 602) vorgesehen wird,**
**wobei das in monobloc-Bauweise ausgeführte Getriebegehäuse (601, 602) und das mindestens zweiteilig ausgeführte Getriebegehäuse (601, 602) im Wesentlichen identisch ausgeformt sind.**

## Claims

1. Gear unit (15) with oil circuit piping (621, 623, 624, 625, 626, 627),
wherein the gear unit (15) comprises a gear unit housing (601, 602) which forms a housing for a part of the oil circuit piping arranged in the interior of the gear unit (15) and the housing (601, 602) comprises an upper housing part (601) and a lower housing part (602),
wherein the lower housing part (602) is a lower housing shell and the upper housing part (601) is an upper housing shell, **characterised in that**
a suction pipe (621) of the oil circuit piping (621, 623, 624, 625, 626, 627) is mounted on the upper housing part (601) in the interior of the gear unit (15)
and a pressure pipe (623) of the oil circuit piping (621, 623, 624, 625, 626, 627) is mounted on the lower housing part (602) in the interior of the gear unit (15)
and **in that** there is provided in the lower housing part (602) a piping distributor (624) which is comprised by the oil circuit piping (621, 623, 624, 625, 626, 627) and to which the pressure pipe (623) and at least one supply pipe (625, 626, 627) are connected,
wherein at least one bearing (606, 607, 608, 609) and/or a gearwheel (610, 611, 612, 613) is/are suppliable with oil for lubrication, via the supply pipe (625, 626, 627).

2. Gear unit according to Claim 1,
**characterised in that**
an oil pan of the oil circuit is arranged in the lower housing part (602),
into which oil pan the suction pipe (621) projects with its open end.

3. Gear unit according to at least one of the preceding claims,
**characterised in that**
the suction pipe (621) and the pressure pipe (623) are connected to a lubricating oil pump (1, 10, 620) to form an oil circuit,
wherein the lubricating oil pump (1, 10, 620) is directly drivable by means of a shaft (24, 603, 604, 605) of the gear unit (15), in particular the input shaft.

4. Gear unit according to at least one of the preceding claims,
**characterised in that**
the lubricating oil pump (1, 10, 620) is connected to a housing cover (16, 21) of the gear unit (15) and said housing cover is connected to the housing (601, 602) of the gear unit (15),
wherein the suction pipe (621) and the pressure pipe (623) are connected to the lubricating oil pump (1, 10, 620) through the housing cover (16, 21).

5. Gear unit according to at least one of the preceding claims,
**characterised in that**
the housing cover (16, 21) is connected to the upper housing part (601) and to the lower housing part (602) of the gear unit (15).

6. Gear unit according to at least one of the preceding claims,
**characterised in that**
at least one supply pipe 625, 626, 627) is connected to the piping distributor (624), which supply pipe has, at its end facing away from the piping distributor (624), a nozzle (628) through which oil for lubrication can be brought onto a gearwheel (610, 611, 612, 613), in particular into the region of the meshing of a gearwheel pair.

7. Gear unit series, comprising variants,
wherein in a first variant there is provided a lubricating oil pump (1, 10, 620) on a cover (16, 21) of a gear unit housing (601, 602), the cover (16, 21) covering a bearing (606, 607, 608, 609) of a gear unit shaft (24, 603, 604, 605, 606), in particular of the input shaft, and the lubricating oil pump (1, 10, 620) being connected via the cover (16, 21) to an oil circuit piping (621, 623, 624, 625, 626, 627) in the gear unit interior,
and wherein in a second variant there is provided a lubricating oil pump (1, 10, 620) on a cover (16, 21) of a gear unit housing (601, 602), which pump is structurally identical to the lubricating oil pump (1, 10, 620) of the first variant, the lubricating oil pump (1, 10, 620) being connected to a partially external piping system, in particular the external piping system comprising an oil filter (40) and/or an oil cooler and/or being connected to an internal piping system (621, 623, 624, 625, 626, 627).

8. Gear unit series, comprising variants,
wherein in a first variant a lubricating oil pump (1, 10, 620) is arranged at a first end of a gear unit shaft (24, 603, 604, 605, 606) and is driven by the gear unit shaft (24, 603, 604, 605, 606),
and in a second variant the lubricating oil pump (1, 10, 620) is arranged at a second end of the gear unit shaft (24, 603, 604, 605, 606) and is driven by this gear unit shaft (24, 603, 604, 605, 606),
wherein the lubricating oil pump (1, 10, 620) is connected in each case to a piping system (621, 623, 624, 625, 626, 627) for lubricating oil in the gear unit interior, in particular to an internal oil circuit piping.

9. Gear unit series, comprising variants,
wherein
in a first variant a gear unit housing (601, 602) is of monobloc design,
in a second variant a gear unit housing (601, 602) is of at least two-part design,
wherein in both variants an internal oil circuit piping (621, 623, 624, 625, 626, 627) is provided
and wherein the gear unit housing (601, 602) of both variants are formed substantially identically.

10. Construction kit for gear unit variants,
comprising a lubricating oil pump (1, 10, 620), a cover (16, 21), a gear unit housing (601, 602), at least one bearing (606, 607, 608, 609), at least one gear unit shaft (24, 603, 604, 605, 606), in particular an input shaft, an oil circuit piping (621, 623, 624, 625, 626, 627) mountable in the gear unit interior, and an external piping system,
wherein the bearing (606, 607, 608, 609) of the gear unit shaft (24, 603, 604, 605, 606) is coverable by the cover (16, 21),
**characterised in that**
to form a first variant of a gear unit series according to Claim 7, the lubricating oil pump (1, 10, 620) is connectable via the cover (16, 21) to an oil circuit piping (621, 623, 624, 625, 626, 627) in the gear unit interior
and to form a second variant of a gear unit series according to Claim 7, the lubricating oil pump (1, 10, 620) is mountable on a cover (16, 21) of the gear unit housing (601, 602), wherein to form the second variant the lubricating oil pump (1, 10, 620) is connectable to a partially external piping system, in particular wherein the external piping system comprises an oil filter (40) and/or an oil cooler and/or is connected to an internal piping system (621, 623, 624, 625, 626, 627).

11. Construction kit for gear unit variants,
comprising a lubricating oil pump (1, 10, 620), a gear unit shaft (24, 603, 604, 605, 606) having a first end and a second end and a piping system (621, 623, 624, 625, 626, 627), **characterised in that**
to form a first variant of a gear unit series according to Claim 8, the lubricating oil pump (1, 10, 620) can be arranged at the first end of the gear unit shaft (24, 603, 604, 605, 606) and is drivable by the gear unit shaft (24, 603, 604, 605, 606)
and to form a second variant of a gear unit series according to Claim 8, the lubricating oil pump (1, 10, 620) can be arranged at the second end of the gear unit shaft (24, 603, 604, 605, 606) and is drivable by this gear unit shaft (24, 603, 604, 605, 606),
wherein the lubricating oil pump (1, 10, 620) is connectable in each case to the piping system (621, 623, 624, 625, 626, 627) for lubricating oil in the gear unit interior, in particular to an internal oil circuit piping.

12. Construction kit for gear unit variants,
comprising a gear unit housing (601, 602) of monobloc design, a gear unit housing (601, 602) of at least two-part design and an internal oil circuit piping (621, 623, 624, 625, 626, 627), wherein the gear unit housing (601, 602) of monobloc design and the gear unit housing (601, 602) of at least two-part design are formed substantially identically,
wherein
to form a first variant of a gear unit series according to Claim 9, the internal oil circuit piping (621, 623, 624, 625, 626, 627) is mountable in the gear unit housing (601, 602) of monobloc design and
to form a second variant of a gear unit series according to Claim 9, the internal oil circuit piping (621, 623, 624, 625, 626, 627) is mountable in the gear unit housing (601, 602) of at least two-part design.

13. Use of a lubricating oil pump in two gear unit variants (1, 10, 620),
**characterised in that**
to form a first variant, a lubricating oil pump (1, 10, 620) is connected via a cover (16, 21) of a gear unit housing (601, 602),
wherein a bearing (606, 607, 608, 609) of a gear unit shaft (24, 603, 604, 605, 606), in particular an input shaft, is covered by the cover (16, 21),
to an oil circuit piping (621, 623, 624, 625, 626, 627) in the gear unit interior
and to form a second variant, the lubricating oil pump (1, 10, 620) is provided on the cover (16, 21) of the gear unit housing (601, 602),
wherein to form the second variant, the lubricating oil pump (1, 10, 620) is connected to a partially external piping system,
in particular wherein the external piping system comprises an oil filter (40) and/or an oil cooler and/or is connected to an internal piping system (621, 623, 624, 625, 626, 627).

14. Use of a lubricating oil pump in two gear unit variants (1, 10, 620),
**characterised in that**
to form a first variant, a lubricating oil pump (1, 10, 620) is arranged at a first end of a gear unit shaft (24, 603, 604, 605, 606) and is driven by the gear unit shaft (24, 603, 604, 605, 606),
and to form a second variant, the lubricating oil pump (1, 10, 620) is arranged at a second end of the gear unit shaft (24, 603, 604, 605, 606) and is driven by this gear unit shaft (24, 603, 604, 605, 606),
wherein the lubricating oil pump (1, 10, 620) is connected in each case to a piping system (621, 623, 624, 625, 626, 627) for lubricating oil in the gear unit interior, in particular to an internal oil circuit piping.

15. Use of an internal oil circuit piping (621, 623, 624, 625, 626, 627) in two gear unit variants (1, 10, 620), **characterised in that**
to form a first variant, the internal oil circuit piping (621, 623, 624, 625, 626, 627) is provided in a gear unit housing (601, 602) of monobloc design
and to form a second variant, the internal oil circuit piping (621, 623, 624, 625, 626, 627) is provided in a gear unit housing (601, 602) of at least two-part design,
wherein the gear unit housing (601, 602) of monobloc design and the gear unit housing (601, 602) of at least two-part design are formed substantially identically.

## Revendications

1. Transmission (15) avec tuyauterie de circuit d'huile (621, 623, 624, 625, 626, 627), laquelle transmission (15) comprend un carter de transmission (601, 602), lequel forme un boîtier pour une partie de la tuyauterie de circuit d'huile disposée à l'intérieur de la transmission (15) et lequel carter (601, 602) comprend une partie supérieure de carter (601) et une partie inférieure de carter (602),
la partie inférieure de carter (602) étant une coque inférieure de carter et la partie supérieure de carter (601) étant une coque supérieure de carter,
**caractérisée en ce**
**qu'**un tuyau d'aspiration (621) de la tuyauterie de circuit d'huile (621, 623, 624, 625, 626, 627) est monté sur la partie supérieure de carter (601) à l'intérieur de la transmission (15),
et un tuyau de refoulement (623) de la tuyauterie de circuit d'huile (621, 623, 624, 625, 626, 627) est monté sur la partie inférieure de carter (602) à l'intérieur de la transmission (15),
et en ce qu'un répartiteur de tuyauterie (624), qui est compris par la tuyauterie de circuit d'huile (621, 623, 624, 625, 626, 627), auquel le tuyau de refoulement (623) et au moins un tuyau d'alimentation (625, 626, 627) sont raccordés, est prévu dans la partie inférieure de carter (602),
au moins un palier (606, 607, 608, 609) et/ou une roue dentée (610, 611, 612, 613) pouvant être alimenté(e)(s) en huile de lubrification via le tuyau d'alimentation (625, 626, 627).

2. Transmission selon la revendication 1,
**caractérisée en ce**
**qu'**une cuve à huile du circuit d'huile, dans laquelle le tuyau d'aspiration (621) fait saillie par son extrémité ouverte, est disposée dans la partie inférieure de carter (602).

3. Transmission selon au moins l'une des revendications précédentes,
**caractérisée en ce**
**que** le tuyau d'aspiration (621) et le tuyau de refoulement (623) sont reliés à une pompe à huile de lubrification (1, 10, 620) pour former un circuit d'huile,
la pompe à huile de lubrification (1, 10, 620) pouvant être entraînée directement au moyen d'un arbre (24, 603, 604, 605) de la transmission (15), en particulier de l'arbre menant.

4. Transmission selon au moins l'une des revendications précédentes,
**caractérisée en ce**
**que** la pompe à huile de lubrification (1, 10, 620) est reliée à un couvercle de carter (16, 21) de la transmission (15) et celui-ci au carter (601, 602) de la transmission (15),
le tuyau d'aspiration (621) et le tuyau de refoulement (623) étant raccordés à la pompe à huile de lubrification (1, 10, 620) à travers le couvercle de carter (16, 21).

5. Transmission selon au moins l'une des revendications précédentes,
**caractérisée en ce**
**que** le couvercle de carter (16, 21) est relié à la partie supérieure de carter (601) et à la partie inférieure de carter (602) de la transmission (15).

6. Transmission selon au moins l'une des revendications précédentes,
**caractérisée en ce que**
qu'au répartiteur de tuyauterie (624) est raccordé au moins un tuyau d'alimentation (625, 626, 627) qui présente à son extrémité éloignée du répartiteur de tuyauterie (624) une buse (628) à travers laquelle de l'huile de lubrification peut être amenée à une roue dentée (610, 611, 612, 613), en particulier dans la zone d'engrènement d'une paire de roues dentées.

7. Série de transmissions, comprenant des variantes,
dans une première variante de laquelle une pompe à huile de lubrification (1, 10, 620) est prévue sur un couvercle (16, 21) d'un carter de transmission (601, 602), lequel couvercle (16, 21) recouvre un palier (606, 607, 608, 609) d'un arbre de transmission (24, 603, 604, 605, 606), en particulier l'arbre menant, et la pompe à huile de lubrification (1, 10, 620) est raccordée via le couvercle (16, 21) à une tuyauterie de circuit d'huile (621, 623, 624, 625, 626, 627) à l'intérieur de la transmission,
et dans une deuxième variante de laquelle une pompe à huile de lubrification (1, 10, 620) est prévue sur un couvercle (16, 21) d'un carter de transmission (601, 602), qui est identique à la pompe à huile de lubrification (1, 10, 620) de la première variante, laquelle pompe à huile de lubrification (1, 10, 620) est raccordée à un système de tuyauterie partiellement externe, lequel système de tuyauterie externe comprend en particulier un filtre à huile (40) et/ou un refroidisseur d'huile et/ou est relié à un système de tuyauterie interne (621, 623, 624, 625, 626, 627).

8. Série de transmissions, comprenant des variantes,
dans une première variante de laquelle une pompe à huile de lubrification (1, 10, 620) est disposée à une première extrémité d'un arbre de transmission (24, 603, 604, 605, 606) et entraînée par l'arbre de transmission (24, 603, 604, 605, 606),
et dans une deuxième variante de laquelle la pompe à huile de lubrification (1, 10, 620) est disposée à une deuxième extrémité de l'arbre de transmission (24, 603, 604, 605, 606) et entraînée par cet arbre de transmission (24, 603, 604, 605, 606),
la pompe à huile de lubrification (1, 10, 620) étant chaque fois raccordée à un système de tuyauterie (621, 623, 624, 625, 626, 627) pour huile de lubrification à l'intérieur de la transmission, en particulier à une tuyauterie de circuit d'huile interne.

9. Série de transmissions, comprenant des variantes,
dans une première variante de laquelle un carter de transmission (601, 602) est réalisé en construction monobloc,
dans une deuxième variante de laquelle un carter de transmission (601, 602) est réalisé au moins en deux parties,
une tuyauterie de circuit d'huile interne (621, 623, 624, 625, 626, 627) étant prévue dans les deux variantes
et le carter de transmission (601, 602) des deux variantes étant conformé de manière sensiblement identique.

10. Jeu de construction pour variantes de transmission,
comprenant une pompe à huile de lubrification (1, 10, 620), un couvercle (16, 21), un carter de transmission (601, 602), au moins un palier (606, 607, 608, 609), au moins un arbre de transmission (24, 603, 604, 605, 606), en particulier un arbre menant, une tuyauterie de circuit d'huile (621, 623, 624, 625, 626, 627) pouvant être montée à l'intérieur de la transmission et un système de tuyauterie externe,
le palier (606, 607, 608, 609) de l'arbre de transmission (24, 603, 604, 605, 606) pouvant être recouvert par le couvercle (16, 21),
**caractérisé en ce**
**que** pour former une première variante d'une série de transmissions selon la revendication 7, la pompe à huile de lubrification (1, 10, 620) peut être raccordée via le couvercle (16, 21) à une tuyauterie de circuit d'huile (621, 623, 624, 625, 626, 627) à l'intérieur de la transmission
et **que** pour former une deuxième variante d'une série de transmissions selon la revendication 7, la pompe à huile de lubrification (1, 10, 620) peut être montée sur un couvercle (16, 21) du carter de transmission (601, 602), sachant que pour former la deuxième variante, la pompe à huile de lubrification (1, 10, 620) peut être raccordée à un système de tuyauterie partiellement externe, lequel système de tuyauterie externe comprend en particulier un filtre à huile (40) et/ou un refroidisseur d'huile et/ou est relié à un système de tuyauterie interne (621, 623, 624, 625, 626, 627).

11. Jeu de construction pour variantes de transmission,
comprenant une pompe à huile de lubrification (1, 10, 620), un arbre de transmission (24, 603, 604, 605, 606) avec une première extrémité et une deuxième extrémité et un système de tuyauterie (621, 623, 624, 625, 626, 627),
**caractérisé en ce**
**que** pour former une première variante d'une série de transmissions selon la revendication 8, la pompe à huile de lubrification (1, 10, 620) peut être disposée à la première extrémité de l'arbre de transmission (24, 603, 604, 605, 606) et entraînée par l'arbre de transmission (24, 603, 604, 605, 606)
et **que** pour former une deuxième variante d'une série de transmissions selon la revendication 8, la pompe à huile de lubrification (1, 10, 620) peut être disposée à la deuxième extrémité de l'arbre de transmission (24, 603, 604, 605, 606) et entraînée par cet arbre de transmission (24, 603, 604, 605, 606),
la pompe à huile de lubrification (1, 10, 620) étant chaque fois raccordée au système de tuyauterie (621, 623, 624, 625, 626, 627) pour huile de lubrification à l'intérieur de la transmission, en particulier à une tuyauterie de circuit d'huile interne.

12. Jeu de construction pour variantes de transmission,
comprenant un carter de transmission (601, 602) en construction monobloc, un carter de transmission (601, 602) réalisé au moins en deux parties et une tuyauterie de circuit d'huile interne (621, 623, 624, 625, 626, 627),
le carter de transmission (601, 602) réalisé en construction monobloc et le carter de transmission (601, 602) réalisé au moins en deux parties étant conformés de manière sensiblement identique,
sachant que pour former une première variante d'une série de transmissions selon la revendication 9, la tuyauterie de circuit d'huile interne (621, 623, 624, 625, 626, 627) peut être montée dans le carter de transmission (601, 602) en construction monobloc et que pour former une deuxième variante d'une série de transmissions selon la revendication 9, la tuyauterie de circuit d'huile interne (621, 623, 624, 625, 626, 627) peut être montée dans le carter de transmission (601, 602) réalisé au moins en deux parties.

13. Utilisation d'une pompe à huile de lubrification dans deux variantes de transmission (1, 10, 620),
**caractérisée en ce**
**que** pour former une première variante, une pompe à huile de lubrification (1, 10, 620) est raccordée via un couvercle (16, 21) d'un carter de transmission (601, 602) à une tuyauterie de circuit d'huile (621, 623, 624, 625, 626, 627) à l'intérieur de la transmission,
lequel couvercle (16, 21) recouvre un palier (606, 607, 608, 609) d'un arbre de transmission (24, 603, 604, 605, 606), en particulier d'un arbre menant,
et **que** pour former une deuxième variante, la pompe à huile de lubrification (1, 10, 620) est prévue sur le couvercle (16, 21) du carter de transmission (601, 602),
sachant que pour former la deuxième variante, la pompe à huile de lubrification (1, 10, 620) est raccordée à un système de tuyauterie partiellement externe,
lequel système de tuyauterie externe comprend en particulier un filtre à huile (40) et/ou un refroidisseur d'huile et/ou est relié à un système de tuyauterie interne (621, 623, 624, 625, 626, 627).

14. Utilisation d'une pompe à huile de lubrification dans deux variantes de transmission (1, 10, 620),
**caractérisée en ce**
**que** pour former une première variante, une pompe à huile de lubrification (1, 10, 620) est disposée à une première extrémité d'un arbre de transmission (24, 603, 604, 605, 606) et entraînée par l'arbre de transmission (24, 603, 604, 605, 606),
et **que** pour former une deuxième variante, la pompe à huile de lubrification (1, 10, 620) est disposée à une deuxième extrémité de l'arbre de transmission (24, 603, 604, 605, 606) et entraînée par cet arbre de transmission (24, 603, 604, 605, 606),
la pompe à huile de lubrification (1, 10, 620) étant chaque fois raccordée à un système de tuyauterie (621, 623, 624, 625, 626, 627) pour huile de lubrification à l'intérieur de la transmission, en particulier à une tuyauterie de circuit d'huile interne.

15. Utilisation d'une tuyauterie de circuit d'huile interne (621, 623, 624, 625, 626, 627) dans deux variantes de transmission (1, 10, 620),
**caractérisée en ce**
**que** pour former une première variante, la tuyauterie de circuit d'huile interne (621, 623, 624, 625, 626, 627) est prévue dans un carter de transmission (601, 602) réalisé en construction monobloc
et **que** pour former une deuxième variante, la tuyauterie de circuit d'huile interne (621, 623, 624, 625, 626, 627) est prévue dans un carter de transmission (601, 602) réalisé au moins en deux parties,
le carter de transmission (601, 602) réalisé en construction monobloc et le carter de transmission (601, 602) réalisé au moins en deux parties étant conformés de manière sensiblement identique.
